# EUROPEAN PATENT SPECIFICATION

(11) **EP 2 834 070 B1**
(45) Date of publication and mention of the grant of the patent: **26.12.2018**
(21) Application number: 13717541.0
(22) Date of filing: 05.04.2013
(51) Int. Cl.: B32B 27/10, B32B 27/32, B32B 37/12

(54) **PROCESS FOR THE MANUFACTURE OF A POLYPROPYLENE-PAPER LAMINATE AND POLYPROPYLENE-PAPER LAMIANATE**
VERFAHREN ZUR HERSTELLUNG EINES POLYPROPYLENPAPIERLAMINATS UND POLYPROPYLENPAPIERLAMINAT
PROCÉDÉ DE FABRICATION D'UN STRATIFIÉ POLYPROPYLÈNE-PAPIER ET STRATIFIÉ POLYPROPYLÈNE-PAPIER

(30) Priority: 05.04.2012 GB 201206258
(43) Date of publication of application: 11.02.2015
(73) Proprietor: A Warne & Co Ltd., London SW19 3BL (GB)
(72) Inventor: MOORE, Jonathan Robert Lewis, London SW19 3BL (GB); WAKELEY, Andrew Richard, London SW19 3BL (GB)
(74) Representative: Abel & Imray
(86) International application number: PCT/GB2013/050889
(87) International publication number: WO 2013/150312

(56) References cited:
- EP-A2- 0 142 312
- WO-A1-95/00326
- JP-A- 2004 345 130
- US-A1- 2006 234 047
- US-A1- 2009 221 408
- DATABASE WPI Thomson Scientific, London, GB; AN 1992-224146 & JP H04 153395 A (DAINIPPON) 26 May 1992 (1992-05-26)
- DATABASE WPI Thomson Scientific, London, GB; AN 1992-224145 & JP H04 153394 A (DAINIPPON) 26 May 1992 (1992-05-26)
- DATABASE WPI Thomson Scientific, London, GB; AN 2001-172410 & JP 2000 336303 A (TOKUYAMA) 5 December 2000 (2000-12-05)

## Description

The present invention relates to a process for the manufacture of a laminate comprising a polypropylene film bonded to a paper substrate, and to novel laminates and materials for making them.

It is known to use laminates comprising a film of thermoplastics material bonded to a paper substrate as packaging for food. The requirements for such packaging are challenging: the materials used must have suitable physical properties; they must be of low toxicity, and have as low an environmental impact as possible; they should not develop a haze on the inside of the packaging during storage; and the manufacturing methods should be as simple and economical as possible.

Typically, in order to make a package for food storage, for example a sandwich box of the type which is ubiquitous in supermarkets, the uncoated side of a film of thermoplastics material is bonded to a paper substrate; the resulting laminate is cut into the shape required for the package; and finally the blank is folded into a three-dimensional shape and the package closed and secured by heat sealing the appropriate overlapping sections together. The finished package is usually produced by means of modern, high-speed packaging machines of the type that form, fill and seal packages from a continuous web or from prefabricated blanks of the laminate.

Many films are prone to develop a haze, particularly when used for high-moisture content foods intended for display in chiller cabinets. To solve this problem, the thermoplastics film usually contains anti-mist additives.

There are a number of ways of bonding the thermoplastics film to the paper substrate. Various types of adhesive may be used. One particularly preferred method involves the use of a UV-curable adhesive. Such methods are well known in the art.

One preferred type of laminate currently on the market uses as the thermoplastic film a three-layer film in which the core layer comprises biaxially oriented polypropylene (BOPP), and the core is provided on each side with a layer or coating of polyvinylidene chloride (PVdC). The BOPP core contains anti-mist additives, slip additives and anti-blocking additives. The PVdC layers make the film heat-sealable, and also enable the film to be printed if desired. Such films are available commercially, for example from Innovia under the Trade Mark RK+. Such films can be bonded to paper using UV adhesives and heat-sealed. However, they have the disadvantage that, being chlorine-containing, they are environmentally undesirable, contributing to acid rain when incinerated. It would be desirable to omit the PVdC coatings from the BOPP substrate, and replace it with a non-chlorine containing polymer, which would solve the environmental problem. However, although the resulting BOPP film can be adhered to the paper substrate using a conventional adhesive such as PVA, it does not adhere satisfactorily to the paper substrate when using UV-curable adhesives. Processes using PVA rather than UV-curable adhesives are less desirable since adherence of the BOPP film to the paper substrate tends to take longer to complete.

Fatty acid amides are commonly used as slip additives and anti-block additives, and are found in the type of BOPP films mentioned above. EP 142312 and JP2004345130 relate to BOPP films. US 2009/0221408 describes a bonding process.

We have now found a solution to the problem of providing an improved thermoplastic film which (i) can be satisfactorily bonded to a paper substrate using a UV-curable adhesive; and (ii) avoids the environmental problems associated with PVdC-coated BOPP films. The thermoplastic film of the invention is also capable of heat sealing at low temperatures.

Accordingly, the present invention provides a process for the manufacture of a polypropylene-paper laminate as defined in Claim 1.

The invention further provides a polypropylene-paper laminate as defined in Claim 9.

The invention further provides a package for food, comprising a laminate according to the invention.

As mentioned above, most known packaging intended for use with food having a high moisture content uses BOPP film containing slip additives, anti-block additives and when needed anti-mist additives. Polypropylene films tend to adhere to surfaces due to their high coefficient of friction. Slip additives are widely used to lower the friction between the film and other surfaces. As well as adhering to other surfaces, BOPP films have a tendency to adhere to themselves, making it difficult to separate layers. This adhesion between film layers is called "blocking", and anti-block additives are commonly added to BOPP. Anti-block additives fall into two broad classes, inorganic (mineral) additives, such as limestone, silica, talc, or zeolites, and organic additives. The latter class includes dispersed waxes (e.g. microcrystalline wax, carnauba wax), natural waxes (e.g. beeswax, paraffin wax, japan wax, montan wax), and synthetic waxes (hydrogenated castor oil, chlorinated hydrocarbon waxes, as well as fatty acid amides).

The most commonly used slip additives are fatty acid amides. Typically, the fatty acid in slip/anti-blocking additives is one derived from a naturally occurring feedstock such as tallow, rapeseed, coconut oil and palm oil. Thus behenamide, erucamide, oleamide, hydrogenated oleamide, stearamide, oleylpalmityl amide, stearyl erucamide and stearyl stearamide are all commonly used, either separately or as mixtures depending on the exact properties required, erucamide and oleamide being the two most common slip additives. The present invention uses a BOPP film which is free from fatty acid amides, specifically, which is free from any one of the fatty acid amides mentioned above. "Free from" should be understood to mean less than 0.5%wt of fatty acid amides.

To enable the film to bond to the paper substrate using a UY-curable adhesive, the BOPP must be substantially free from fatty acid amides. Preferably, the BOPP is substantially free from all slip additives. Preferably, no slip additives are added during the manufacturing process, although it is understood that manufacturing constraints may mean that contaminant slip additives may occasionally be present in the BOPP. Ideally such contaminants, for example fatty acid amides, are present at a level of less than 0.5 %wt, more preferably less than 0. 1%wt, especially less than 0.01%wt. Further, the BOPP is preferably substantially free from wax; most preferably, the BOPP is free from all organic anti-block additives. Preferably, no organic anti-block additives are added during the manufacturing process, although it is understood that manufacturing constraints may mean that contaminant anti-block additives may occasionally be present in the BOPP. Ideally such contaminants, for example fatty acid amides, are present at a level of less than 0.5%wt, more preferably less than 0.1%wt, especially less than 0.01%wt.

Films comprising BOPP substantially free from slip additives and organic anti-block additives, specifically free from fatty acid amides, are known. Such films are normally used in applications such as vacuum metalizing. They have not previously been used in the manufacture of laminates with a paper substrate for food packaging, in particular they have not been used as a substrate for food packaging that is anti-mist and which is capable of heat sealing at low temperatures.

The BOPP films used in the present invention do not carry any chlorine-containing polymer coating; specifically, they do not carry any PVdC coating. Omitting the PVdC layer from BOPP films reduces the heat-sealability of the film, and therefore the BOPP film used in the present invention preferably carries a layer on at least one of its faces which permits heat sealing, especially low-temperature heat sealing. Such layers may be formed of, for example, chlorine-free polymers such as polyethylene, polypropylene, polybutene and/or polyterpene, which may be blended in various ratios to create the desired heat seal performance. Once such films have been bonded to a paper substrate, the resulting laminates have the additional advantage that they can be heat sealed at a temperature lower than the known PVdC-coated BOPP laminates. When film is
laminated to a paper substrate, the heat seal temperature will vary depending on the thickness of the substrate. Temperatures of 185°C-230°C are typical in a production environment. However, lower heat sealing temperature of a film to itself is understood to be an indicator of lower temperature being required for heat sealing of such a film when bonded to a paper substrate. For example, a PVdC-coated BOPP film such as RK+ can be heat sealed to itself at a temperature of above 95°C. In comparison, the unlaminated film used in the present invention can be heat sealed to itself at about 85°C, or even lower. This lower temperature for heat sealing of the film to itself not only results in the possibility of lower energy costs, it means that lower temperatures on the packing filling lines may be achievable.

Anti-mist coating compositions are available commercially, for example AM 40 available from Sun Chemical contains sodium bis(tridecyl) sulfosuccinate. Further examples of anti-mist additives include primary alcohol ethoxylates, secondary alcohol ethoxylates and nonylphenol alcohol ethoxylates. The anti-mist coating which is present in the invention may be applied to the BOPP film before the lamination process (on top of the heat-sealable polymer layer, if present), or it may be applied as part of the lamination process using an in-line coater. Preferably, because anti-mist coatings tend to be applied using an organic solvent, it is applied to the BOPP film before the lamination process. However, it has been found that if an anti-mist coating is applied across the whole surface of the film at the coat-weights usually recommended by the suppliers of coating compositions, this can adversely affect the heat-seal properties of the film. For example, higher temperatures or longer dwell times may be required in order to burn the anti-mist coating away from the portion of the surface to be heat sealed. Therefore, ideally, the anti-mist coating is applied at a very low concentration. Thus, in a preferred embodiment, the present invention makes use of an anti-mist coating applied at a dry coat-weight of not more than 0.1 gm⁻², preferably less than 0.07 gm⁻², more preferably less than 0.05 gm⁻², still more preferably less than 0.03gm⁻², yet more preferably less than 0.02gm⁻², especially less than 0.01gm⁻².

Preferably, one face of the BOPP film (the face to be bonded to the paper substrate) is subjected to a cleaning step (e.g. subjected to a treatment to increase the surface energy of the film) prior to bonding, in order to enhance the bonding. This step may be part of the manufacturing process for the film, and suitable cleaning methods, including corona discharge treatment and plasma treatment, are well known in the art.

Thus, in an especially preferred embodiment of the invention, the BOPP film carries a coating of a heat-sealable chlorine-free polymer on one of its faces; an anti-mist coating is provided on top of said coating; and the other face of the film has been subjected to a cleaning method. In an alternative embodiment, the BOPP film carries a coating of a heat-sealable chlorine-free polymer on both of its faces; an anti-mist coating is provided on the surface of one of said coatings; while the other surface has been subjected to a cleaning method (e.g. the other surface has been subjected to a treatment to increase the surface energy of the film).

Throughout this Specification and claims, "paper" should be understood to include any grade of paper, including lightweight paper, paperboard, and card. Preferably paperboard is used.

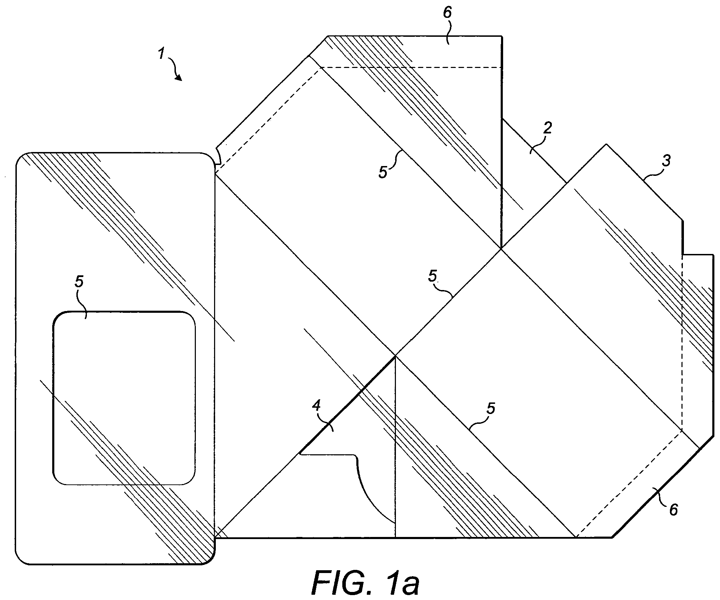

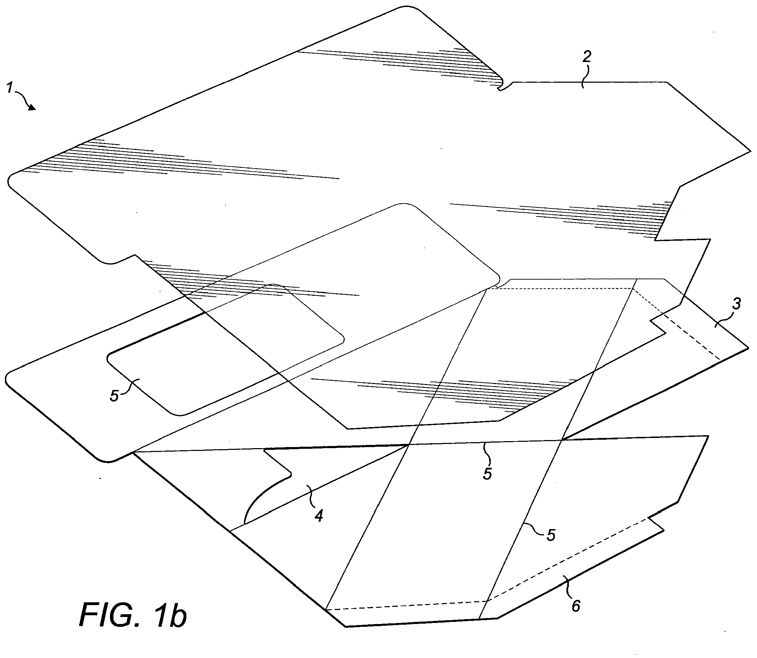

In the attached drawings, Figure 1a illustrates a blank for a sandwich box made from a laminate according to the invention, and Figure 1b illustrates an exploded view of the blank of Figure 1a. The blank, illustrated generally at (1), has on one face a BOPP film (2) which is substantially free from fatty acid amides. The other face of blank (1) is formed by a paperboard substrate (3) having cut-out areas (4) and (5) where no paper is present. Cut-out area (5) provides a transparent window of BOPP in the finished sandwich box. Film (2) is bonded by a UV-curable adhesive to substrate (3). The paperboard face of blank (1) is scored with lines (5) to enable folding into the three-dimensional shape of the finished sandwich box. Tab portions (6) are provided to secure the finished sandwich box into its three-dimensional shape, each tab (6) being capable of being heat-sealed to a complementary portion of blank (1).

The following Examples illustrate the invention.

### Example 1

A film comprising Treofan MLD 20 micron coated with Sun Chemical AM40 anti-mist coating with a finished coat weight of 0.05/0.10 grammes per square metre has a surface energy min 38 Dyne on laminating face. This film is laminated to paperboard using a UV-curable adhesive to form.

### Example 2

Toray F72W 18 micron coated with Sun Chemical Am40 anti-mist coating with a finished coat weight of 0.05/0.10 grammes per square metre has a surface energy min 40/42 Dyne on laminating face. Lamination of this film to paperboard using a UV-curable adhesive produces a highly satisfactory package for food packaging.

## Claims

1. A process for the manufacture of a polypropylene-paper laminate, comprising providing a film of biaxially-orientated polypropylene which does not carry any chlorine-containing polymer coating, and laminating said film to a paper substrate using a UV-curable adhesive; in which said film contains less than 0.5%wt fatty acid amides, the body of said film is free from sodium bis(tridecyl) sulfosuccinate, primary alcohol ethoxylates, secondary alcohol ethoxylates and nonylphenol alcohol ethoxylates, said film carries an anti-mist coating on its face remote from the face to be bonded to the paper substrate.

2. A process as claimed in claim 1, in which said film is substantially free from slip additives.

3. A process as claimed in either claim 1 or claim 2, in which said film is substantially free from waxes.

4. A process as claimed in any one of the preceding claims, in which said film is substantially free from organic anti-block additives.

5. A process as claimed in any one of the preceding claims, in which said anti-mist coating is present at a dry coat-weight of less than 0.03gm⁻².

6. A process as claimed in any one of the preceding claims, in which the face of said film to be bonded to the paper substrate is subjected to a cleaning step prior to bonding to the paper substrate.

7. A process as claimed in any one of the preceding claims, in which said film carries a coating of a heat-sealable chlorine-free polymer on one of its faces; an anti-mist coating is provided on top of said coating; and the other face of the film has been subjected to a cleaning method prior to bonding to the paper substrate.

8. A process as claimed in any one of the preceding claims, in which the paper substrate is made of paperboard.

9. A polypropylene-paper laminate comprising a film of biaxially-orientated polypropylene bonded to a paper substrate using a UV-curable adhesive; in which said film contains less than 0.5%wt fatty acid amides, is free from sodium bis(tridecyl) sulfosuccinate, primary alcohol ethoxylates, secondary alcohol ethoxylates and nonylphenol alcohol ethoxylates within the body of the film, carries an anti-mist coating on its face remote from the face bonded to the paper substrate, and does not carry any chlorine-containing polymer coating.

10. A laminate as claimed in claim 9, preparable by a process as claimed in any one of claims 2 to 8.

11. A package for food, said package comprising a laminate as claimed in either claim 9 or claim 10.

## Patentansprüche

1. Ein Verfahren zur Herstellung eines Polypropylen-Papierlaminats, umfassend das Bereitstellen eines Films aus biaxial orientiertem Polypropylen, der keine chlorhaltige Polymerbeschichtung trägt, und das Laminieren des Films auf ein Papiersubstrat unter Verwendung eines UV-härtbaren Haftmittels, wobei der Film weniger als 0,5 Gew.-% Fettsäureamide enthält, der Körper des Films frei von Natriumbis(tridecyl)sulfosuccinat, Ethoxylaten primärer Alkohole, Ethoxylaten sekundärer Alkohole und Nonylphenolalkohol-Ethoxylaten ist, der Film eine Anti-Beschlag-Beschichtung auf seiner Seite abseitig von der Seite, die an das Papiersubstrat zu binden ist, trägt.

2. Ein Verfahren wie in Anspruch 1 beansprucht, wobei der Film im Wesentlichen frei von Gleitmittelzusätzen ist.

3. Ein Verfahren wie in entweder Anspruch 1 oder Anspruch 2 beansprucht, wobei der Film im Wesentlichen frei von Wachsen ist.

4. Ein Verfahren wie in einem der vorhergehenden Ansprüche beansprucht, wobei der Film im Wesentlichen frei von organischen Anti-Block-Additiven ist.

5. Ein Verfahren wie in einem der vorhergehenden Ansprüche beansprucht, wobei die Anti-Beschlag-Beschichtung in einem Gewicht der trockenen Beschichtung von weniger als 0,03 gm⁻² vorliegt.

6. Ein Verfahren wie in einem der vorhergehenden Ansprüche beansprucht, wobei die Seite des Films, die an das Papiersubstrat zu binden ist, vor dem Binden an das Papiersubstrat einem Reinigungsschritt unterworfen wird.

7. Ein Verfahren wie in einem der vorhergehenden Ansprüche beansprucht, wobei der Film eine Beschichtung aus einem heiß-siegelfähigen chlorfreien Polymer auf einer seiner Seiten trägt, auf dieser Beschichtung eine Anti-Beschlag-Beschichtung bereitgestellt wird, und die andere Seite des Films einem Reinigungsverfahren vor der Bindung an das Papiersubstrat unterworfen wurde.

8. Ein Verfahren wie in einem der vorhergehenden Ansprüche beansprucht, wobei das Papiersubstrat aus Karton hergestellt ist.

9. Ein Polypropylen-Papierlaminat, das einen Film aus biaxial orientiertem Polypropylen umfasst, welche mittels eines UV-härtbaren Haftmittels an ein Papiersubstrat gebunden ist, wobei der Film weniger als 0,5 Gew.-% Fettsäureamide enthält, frei von Natriumbis(tridecyl)sulfosuccinat, Ethoxylaten primärer Alkohole, Ethoxylaten sekundärer Alkohole und Nonylphenolalkohol-Ethoxylaten innerhalb des Filmkörpers ist, eine Anti-Beschlag-Beschichtung auf seiner Seite abseitig von der Seite, die an das Papiersubstrat gebunden ist, trägt und keine chlorhaltige Polymerbeschichtung trägt.

10. Ein Laminat wie in Anspruch 9 beansprucht, herstellbar durch ein wie in einem der Ansprüche 2 bis 8 beanspruchtes Verfahren.

11. Eine Verpackung für Lebensmittel, wobei die Verpackung ein Laminat wie in entweder Anspruch 9 oder Anspruch 10 beansprucht umfasst.

## Revendications

1. Procédé de fabrication d'un stratifié de polypropylène-papier, comprenant la fourniture d'un film de polypropylène à orientation biaxiale qui ne porte aucun revêtement de polymère qui contient du chlore, et la stratification dudit film sur un substrat de papier en utilisant un adhésif qui durcit aux UV ; dans lequel ledit film contient moins de 0,5 % d'amides en poids total d'acide gras, le corps dudit film est exempt de sulfosuccinate bi(tridécylique) de sodium, d'éthoxylate d'alcool primaire, d'éthoxylate d'alcool secondaire et d'éthoxylate d'alcool de nonylphénol, ledit film porte un revêtement anti-buée sur sa face distante de la face à coller sur le substrat de papier.

2. Procédé selon la revendication 1, dans lequel ledit film est sensiblement exempt d'additifs de lubrification.

3. Procédé selon la revendication 1 ou la revendication 2, dans lequel ledit film est sensiblement exempt de cires.

4. Procédé selon l'une quelconque des revendications précédentes, dans lequel ledit film est sensiblement exempt d'additifs anti-adhérents organiques.

5. Procédé selon l'une quelconque des revendications précédentes, dans lequel ledit revêtement anti-buée est présent en un poids d'enrobage à sec inférieur à 0,03 gm⁻².

6. Procédé selon l'une quelconque des revendications précédentes, dans lequel la face dudit film à coller sur le substrat de papier est soumise à une étape de nettoyage avant le collage sur le substrat de papier.

7. Procédé selon l'une quelconque des revendications précédentes, dans lequel ledit film porte un revêtement de polymère sans chlore thermosoudable sur l'une de ses faces ; un revêtement anti-buée est fourni sur ledit revêtement ; et l'autre face du film a été soumise à un procédé de nettoyage avant le collage sur le substrat de papier.

8. Procédé selon l'une quelconque des revendications précédentes, dans lequel le substrat de papier est constitué de carton.

9. Stratifié de polypropylène-papier comprenant un film de polypropylène à orientation biaxiale collé sur un substrat de papier en utilisant un adhésif qui durcit aux UV ; dans lequel ledit film contient moins de 0,5 % d'amides en poids total d'acide gras, le corps dudit film est exempt de sulfosuccinate bi(tridécylique) de sodium, d'éthoxylate d'alcool primaire, d'éthoxylate d'alcool secondaire et d'éthoxylate d'alcool de nonylphénol, porte un revêtement anti-buée sur sa face distante de la face collée sur le substrat de papier, et ne porte aucun revêtement de polymère qui contient du chlore.

10. Stratifié selon la revendication 9, pouvant être préparé selon un procédé selon l'une quelconque des revendications 2 à 8.

11. Emballage de nourriture, ledit emballage comprenant un stratifié selon la revendication 9 ou la revendication 10.
